# EUROPEAN PATENT APPLICATION

(11) **EP 1 348 367 A1**
(43) Date of publication of application: **01.10.2003**
(21) Application number: 03380069.9
(22) Date of filing: 25.03.2003
(51) Int. Cl.: A47J 37/12, F24C 15/32

(54) **Heat exchanger for gas convection fryers and ovens**

(30) Priority: 25.03.2002 ES 200200695
(71) Applicant: Mirror Maquinaria Industrial Restauracion Rapida y Organizacion de Restaurantes S.A., 08907 L'Hospitalet de Llobregat (ES)
(72) Inventor: Gil Garcia, Vicente, 08907 L'Hospitalet de Llobregat (ES)
(74) Representative: Ponti Sales, Adelaida

(57) **Abstract**

It comprises a tubular body (1) through which there circulate the warm gases and fumes from a burner, and is characterised in that the tubular body (1) has a first input section (1a) and a second section (1b) which is provided with at least one longitudinal slot (2) which defines at least two parallel and independent conduits (3), (4), between which conduits the oil or atmosphere circulate. The contact surface between the heat exchanger, through which the gas from the burner circulates, and the oil or the atmosphere inside an oven can be increased very considerably.

## Description

### BACKGROUND OF THE INVENTION

At present, the system of heat exchange in gas fryers, such as those used for cooking fried potatoes and the like, between the flow of gas from the burner and the oil is implemented through a plurality of conduits, generally between three and four conduits, arranged in the lower base of the fryer vat and submerged under the oil.

Patent no. ES 2025 907 discloses a fryer of the type mentioned. Said document discloses some improvements in gas fryers in which the heat-exchanging conduits or pipes are made up a long, pressed tubular body with a slightly oval cylindrical section.

Such conduits nevertheless have the main disadvantage that they suffer from an efficiency loss of approximately 50% due to the ratio which exists between the contact surface of the conduit and the oil, which considerably detracts from the profitability of the fryer.

### DESCRIPTION OF THE INVENTION

The objective of the heat exchanger of this invention is to solve the disadvantages of the devices known in the art, while further providing a number of advantages which are disclosed below.

The heat exchanger for gas-convection fryers and ovens is of the type which comprises a tubular body through which the hot gases and fumes from a burner circulate, and is characterised in that the tubular body has a first input section and a second section provided with at least one longitudinal slot which defines at least two parallel and independent conduits, between which the oil of a fryer or the atmosphere inside an oven circulates.

Thanks to these characteristics, the contact surface between the heat exchangers, through which the gas from the burner circulates, and the oil or the atmosphere inside an oven can be increased very considerably, practically doubling said contact surface in relation to the exchangers existing in the market, and thereby optimising efficiency by heating the oil more quickly without increasing energy consumption. Moreover, it has the advantage that said contact surface is larger without increasing the space occupied by the exchanger, allowing a suitable input of hot gases and fumes from the burner, thanks to the first input section.

Preferably, each one of the independent conduits of the tubular body has a substantially parallelepiped shape, thereby achieving a design with a larger contact surface for a same distance between conduits.

Preferably, the exchanger of the invention is manufactured in stainless steel.

According to another aspect of the invention, it presents a heat exchanger which comprises two longitudinal slots. It thus has the advantage of facilitating cleaning of the oil vat in a fryer by permitting greater free space in the bottom of the vat.

### BRIEF DESCRIPTION OF THE DRAWINGS

In order to facilitate the description of all that has been outlined above, some drawings are attached which, schematically and solely by way of non-restrictive example, show two practical cases of embodiment of the heat exchanger of the invention, in which:
Figure 1 is a side-elevation and plan view of the heat exchanger of this invention;
Figure 2 is a side-elevation view of the front and rear parts of the exchanger shown in Figure 1;
Figure 3 is a perspective view of the exchanger shown in Figures 1 and 2;
Figure 4 is a perspective view of a second embodiment of the heat exchanger of the invention;
Figure 5 is a plan view of the layout of the heat exchanger of Figure 4 mounted in a gas fryer; and
Figure 6 is a schematised perspective view of a section of the interior of a gas-convection oven which includes the exchangers shown in Figures 1 and 2.

### DESCRIPTION OF A PREFERRED EMBODIMENT

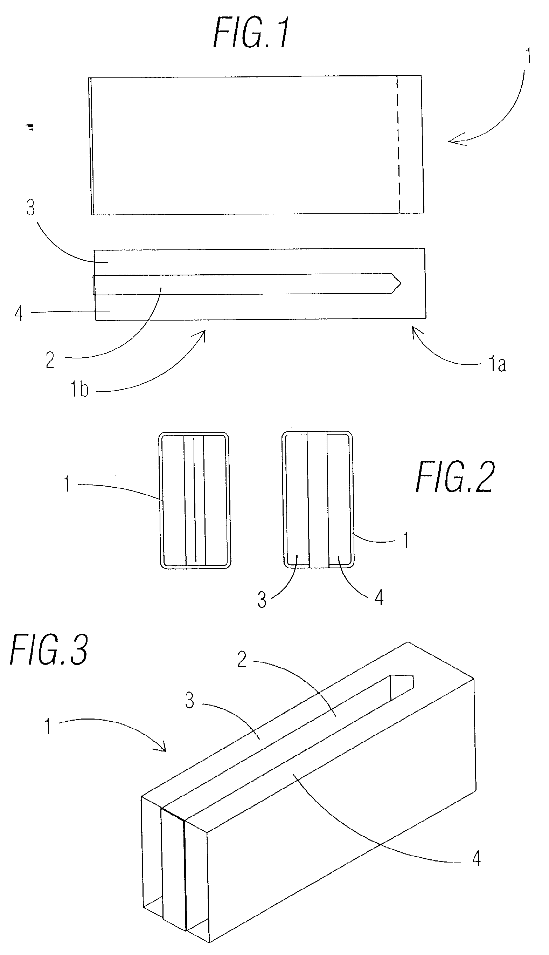

Figures 1, 2 and 3 show a first embodiment of the exchanger of the invention for gas-convection fryers and ovens, through which there circulate the hot gases and fumes from the burners and which lead into the evacuation duct or chimney of a convection fryer or oven, includes a tubular body 1 made of stainless steel which has a first input section 1a and a second section 1b which is provided with one longitudinal slot 2 which defines two parallel and independent conduits 3, 4, between which the oil or interior atmosphere of an oven circulates.

Both conduits 3, 4 are of substantially parallelepiped shape, so that the oil is in direct contact with eight side walls. The heating of the oil in a fryer or the atmosphere inside an oven is thereby carried out with full efficacy and optimum efficiency.

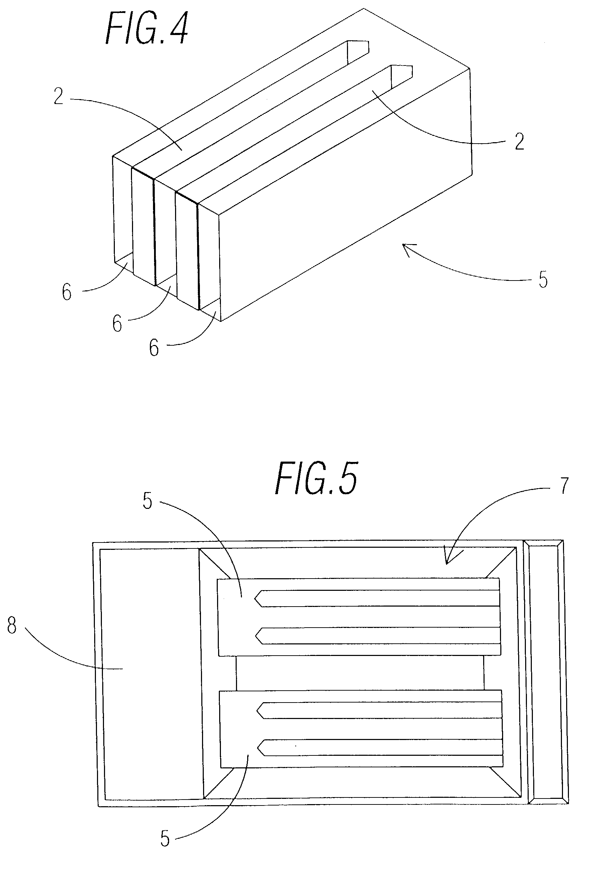

Figure 4 shows a second preferred embodiment of a heat exchanger of the invention, showing a heat exchanger 5 made up of two tubular bodies 1, defining three conduits 6.

Figure 5 shows a pair of heat exchangers 5 of the invention mentioned in the preceding paragraph, which are situated at the bottom of a vat 7 of a fryer 8, leaving the exchangers submerged in the oil, while the burnt gases are driven and evacuated from the burners (not shown) through the exchanger conduits.

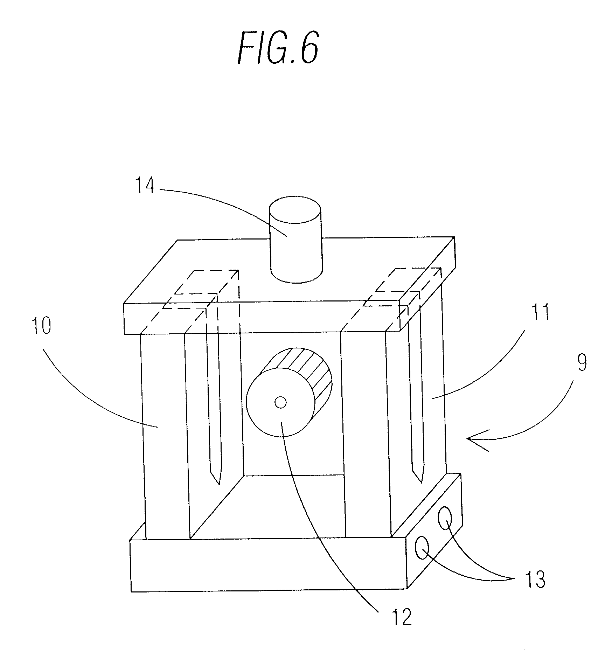

Figure 6 shows the interior of a convection oven 9 which has a pair of exchangers 10, 11 situated at the ends, with a fan 12 between them to distribute the air inside the oven 9. Through the exchangers 10, 11 there passes a flow of gas from some burners 13 which heats the interior of the oven 9 and emerges through the outlet duct 14 situated at the top part of the figure.

Independent of the object of this invention are the materials used for manufacturing the parts which make up the heat exchanger disclosed, together with the shapes and dimensions thereof and all accessory details which might be presented, which can be replaced by others that are technically equivalent as long as they do not affect its essential nature nor depart from the sphere defined by the claims attached below.

## Claims

1. Heat exchanger for gas-convection fryers and ovens which comprise a tubular body (1) through which there circulate the hot gases and fumes from a burner, **characterised in that** the tubular body (1) has a first input section (1a) and a second section (1b) provided with at least one longitudinal slot (2) which defines at least two parallel and independent conduits (3), (4), between which the oil of a fryer or the atmosphere inside an oven circulates.

2. Heat exchanger as claimed in Claim 1, **characterised in that** each one of the independent conduits (3), (4) is of substantially parallelepiped shape.

3. Heat exchanger as claimed in Claim 1, **characterised in that** it is manufactured in stainless steel.

4. Heat exchanger as claimed in claim 1, **characterized in that** it comprises two longitudinal slots.
